# EUROPEAN PATENT SPECIFICATION

(11) **EP 3 978 175 B1**
(45) Date of publication and mention of the grant of the patent: **05.06.2024**
(21) Application number: 21199459.5
(22) Date of filing: 28.09.2021
(51) Int. Cl.: B23K 9/095, B08B 15/04, B23K 9/10, B23K 9/16, B23K 9/32, B23K 31/02, B23K 37/00

(54) **METHOD OF AND SYSTEM FOR CONTROLLING WELDING FUME EXTRACTION**
VERFAHREN UND SYSTEM ZUR STEUERUNG DER SCHWEISSRAUCHEXTRAKTION
PROCÉDÉ ET SYSTÈME DE COMMANDE D'EXTRACTION DE FUMÉE DE SOUDAGE

(30) Priority: 28.09.2020 US 202017034327
(43) Date of publication of application: 06.04.2022
(73) Proprietor: Lincoln Global, Inc., Santa Fe Springs, CA 90670 (US)
(72) Inventor: RITCHOT, Rob, Winnipeg, MB R2N 4H9 (CA); TREMBLAY, Sebastien, Winnipeg, MB R2H 1K8 (CA)
(74) Representative: Hoyng Rokh Monegier B.V.

(56) References cited:
- EP-A1- 3 187 298
- WO-A1-2007/029033
- US-A1- 2009 321 403

## Description

### BACKGROUND OF THE INVENTION

Embodiments of the present invention generally relate to systems and methods related to welding fume extraction, and more specifically to a method of controlling fume extraction and a system for performing fume extraction, being configured to regulate a fume extraction flow rate for various welds in a welding sequence. Fume extraction systems are commonly utilized to remove welding fumes and particulate from a welder's breathing zone. Such systems generally require an operator manually setting a fume extraction flow rate (e.g., cfm) at a fume extraction system (e.g., a housing having a motorized fan) when performing a series of different welds. However, operating a fume extraction system at a single flow rate setting does not take into account the unique characteristics of each weld or weld joint. For example, operating at a single flow rate setting can be suitable for certain types of configurations (e.g., welds performed in a wider work envelope), but yet inadequate in other situations (e.g., welds performed in small, confined spaces).

Fume extraction is also a balance of removing welding fumes while maintaining adequate shielding gas coverage (e.g., the inert or semi-inert gas environment that is necessary to protect molten weld metal from oxygen, nitrogen, or hydrogen in the air). For example, a fume extraction flow rate setting that is otherwise suitable for a wide-open weld joint may compromise shielding gas coverage for a weld joint that is situated in a small or confined space, respectively, based on the extraction of shielding gas surrounding the molten weld metal. Consequently, many operators set a fume extraction flow rate at a bottom end of a range to maintain shielding gas coverage for a majority of the welds, irrespective of an ideal fume extraction flow rate for a particular weld or configuration. US 2009/321403 A1 (describing the steps and features of the preamble of claims 1 and 6) and WO 2007/029033 A1 disclose methods used for fume extraction for welding.

In view of the foregoing problems and shortcomings of existing fume extraction systems, the present application describes a system and method to overcome these shortcomings.

### SUMMARY

According to a first aspect of the present invention, a method of controlling fume extraction is defined in claim 1, and comprises utilizing a welding sequence associated with at least two welds, wherein the welding sequence defines at least a first welding procedure to create a first weld including a first weld parameter and a second welding procedure to create a second weld including a second weld parameter; wherein the first welding procedure includes a first flow rate based on the first weld parameter, and wherein the second welding procedure includes a second flow rate based on the second weld parameter; and wherein the method further comprises setting a flow control device associated with fume extraction to the first flow rate during the first weld of the welding sequence, and setting the flow control device to the second flow rate during the second weld of the welding sequence. According to a second aspect of the present invention, a system of performing fume extraction is defined in claim 6.

Further embodiments of the present invention are defined in the dependent claims.

### BRIEF DESCRIPTION OF THE DRAWINGS

In the accompanying drawings, which are incorporated in and constitute a part of the specification, embodiments of the invention are illustrated, which, together with a general description of the invention given above, and the detailed description given below, serve to exemplify embodiments of this invention. It will be appreciated that illustrated element boundaries (e.g., boxes, groups of boxes, or other shapes) in the figures represent one embodiment of boundaries. In some embodiments, one element may be designed as multiple elements, or multiple elements may be designed as one element. In some embodiments, an element shown as an internal component of another element may be implemented as an external component and vice versa. Furthermore, elements may not be drawn to scale.
FIG. 1 illustrates a block diagram of an exemplary fume extraction control system.
FIG. 2 illustrates an exemplary welding sequence associated with performing two or more welds.
FIG. 3 illustrates another exemplary welding sequence associated with performing two or more welds.
FIG. 4 illustrates exemplary user interfaces for interacting with an exemplary fume extraction control system.
FIG. 5 illustrates a schematic block diagram of an exemplary fume extraction control system connected to an exemplary welding system.
FIG. 6 illustrates a schematic block diagram of an exemplary fume extraction unit with an arm and an exemplary welding fume gun operatively connected to an exemplary fume extraction control system.
FIG. 7 illustrates a schematic block diagram of another exemplary fume extraction control system operatively connected to sensors and an air check unit for monitoring an exemplary welding system.
FIGS. 8 illustrates a flowchart of an exemplary method for setting a fume extraction flow rate and/or a flow control device according to exemplary embodiments.
FIG. 9 illustrates a flow chart of an exemplary method for determining a fume extraction flow rate and setting a flow control device to the fume extraction flow rate according to exemplary embodiments.
FIG. 10 illustrates a flow chart of an exemplary method for determining a fume extraction flow rate and/or a flow control device setting according to exemplary embodiments.
FIG. 11 illustrates a flow chart of another exemplary method for determining a fume extraction flow rate and/or a flow control device setting according to exemplary embodiments.
FIG. 12 illustrates a flow chart of yet another exemplary method for determining a fume extraction flow rate and/or a flow control device setting according to exemplary embodiments.

### DETAILED DESCRIPTION

The following includes definitions of exemplary terms used throughout the disclosure. Both singular and plural forms of all terms fall within each meaning:

"Component," as used herein can be defined as a portion of hardware, a portion of software, or a combination thereof. A portion of hardware can include at least a processor and a portion of memory, wherein the memory includes an instruction to execute.

"Logic," synonymous with "circuit" as used herein, includes but is not limited to hardware, firmware, software and/or combinations of each to perform a function(s) or an action(s). For example, based on a desired application or needs, logic may include a software controlled microprocessor, discrete logic such as an application specific integrated circuit (ASIC), or other programmed logic device and/or controller. Logic may also be fully embodied as software.

"Software", as used herein, includes but is not limited to one or more computer readable and/or executable instructions that cause a computer, logic, or other electronic device to perform functions, actions, and/or behave in a desired manner. The instructions may be embodied in various forms such as routines, algorithms, modules or programs including separate applications or code from dynamically linked libraries. Software may also be implemented in various forms such as a stand-alone program, a function call, a servlet, an applet, instructions stored in a memory, part of an operating system or other type of executable instructions. It will be appreciated by one of ordinary skill in the art that the form of software is dependent on, for example, requirements of a desired application, the environment it runs on, and/or the desires of a designer/programmer or the like.

Embodiments of systems, architectures, processes, and methods for controlling fume extraction are disclosed herein. The examples and figures herein are illustrative only and are not meant to limit the subject invention, which is measured by the scope and spirit of the claims. The showings are for the purpose of illustrating exemplary embodiments of the subject invention only and not for the purpose of limiting same.

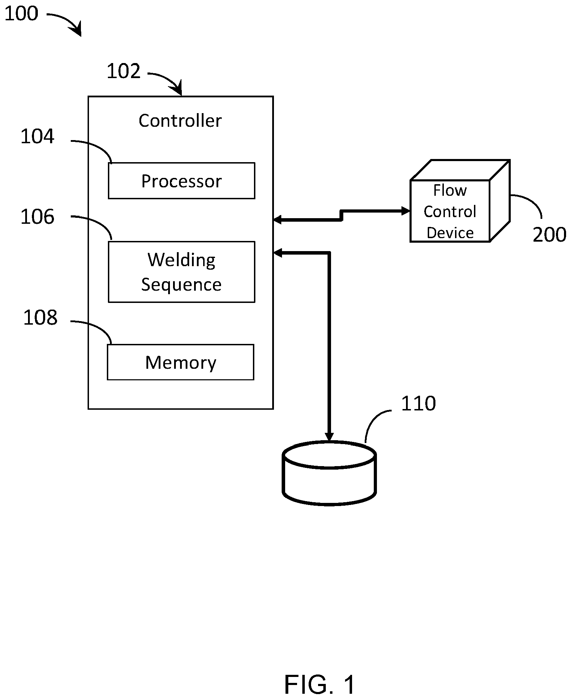

With reference to FIG. 1, a block diagram of an exemplary fume extraction control system 100 is shown. In this embodiment, the control system 100 includes a controller 102 comprising a processor 104, a welding sequence 106 associated with creating at least two welds, and a memory 108. The control system 100 may include various components, logic, and software. In one embodiment, the controller 102 comprises a central processing unit (CPU) that is configured to execute the disclosed methodologies and processes described herein. In another embodiment, the controller 102 can be a stand-alone device/component or part of a welding power source controller that is configured to modify electrical characteristics of a welding power source and its output. A system controller may also comprise one or more of the controllers. Any or all of these controllers and control systems may be combined to various degrees into shared systems or enclosures.

Furthermore, the controller 102 can directly or indirectly control one or more fume extraction systems, flow control devices, welding power sources, parameters, robots, fixtures, feeders, etc. associated with one or more welding sequences or processes, for example, stored in the memory 108. An example of direct control is the setting of a fume extraction flow rate associated with a fume extraction system, the setting of a flow control device, or the setting of various welding parameters (voltage, current, waveform, etc.) associated with a welding power supply. An example of indirect control is the communication of welding position, path, speed, etc. to a separate controller or other peripheral device. The controller 102 may also execute welding sequences, for example, as described in US Pub. No. 2014/0042136 (Ser. No. 13/803,032). The hierarchy of the various controllers that may be associated with a welding cell can be arranged in any suitable manner to communicate the appropriate commands to the desired devices. It is appreciated, that as used herein, the welding sequence 106 may be used as a welding routine.

Moreover, those skilled in the art will appreciate that the inventive methods may be practiced with other computer system configurations, including single-processor or multiprocessor computer systems, minicomputers, mainframe computers, as well as personal computers, hand-held computing devices, microprocessor-based or programmable consumer electronics, and the like, each of which may be operatively coupled to one or more associated devices. The illustrated aspects of the invention may also be practiced in distributed computing environments where certain tasks are performed by remote processing devices that are linked through a communications network. In a distributed computing environment, program modules may be located in both local and remote memory storage devices. For instance, a remote database, a local database, a cloud-computing platform, a cloud database, or a combination thereof can be utilized with the controller 102.

The controller 102 can utilize various computing environments for implementing aspects of the invention, including, for example, a computer, wherein the computer includes a processing unit, a system memory, and a system bus. The system bus couples system components including, but not limited to the system memory to the processing unit. The processing unit may be any of various commercially available processors. Dual microprocessors and other multi-processor architectures also can be employed as the processing unit. The system bus can be any of several types of bus structure including a memory bus or memory controller, a peripheral bus and a local bus using any of a variety of commercially available bus architectures. The system memory can include read only memory (ROM) and random access memory (RAM).

The controller 102 can include at least some form of computer readable media. Computer readable media can be any available media that can be accessed by the computer. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other magnetic storage devices, or any other medium which can be used to store the desired information and which can be accessed by the controller 102. A number of program modules may be stored in the drives and RAM, including an operating system, one or more application programs, other program modules, and program data.

The controller 102 can operate in a networked environment using logical and/or physical connections to one or more remote computers. The remote computer(s) can be a workstation, a server computer, a router, a personal computer, microprocessor based entertainment appliance, a peer device or other common network node, and typically includes many or all of the elements described relative to the computer. The logical connections depicted include a local area network (LAN) and a wide area network (WAN). Such networking environments are commonplace in offices, enterprise-wide computer networks, intranets and the Internet.

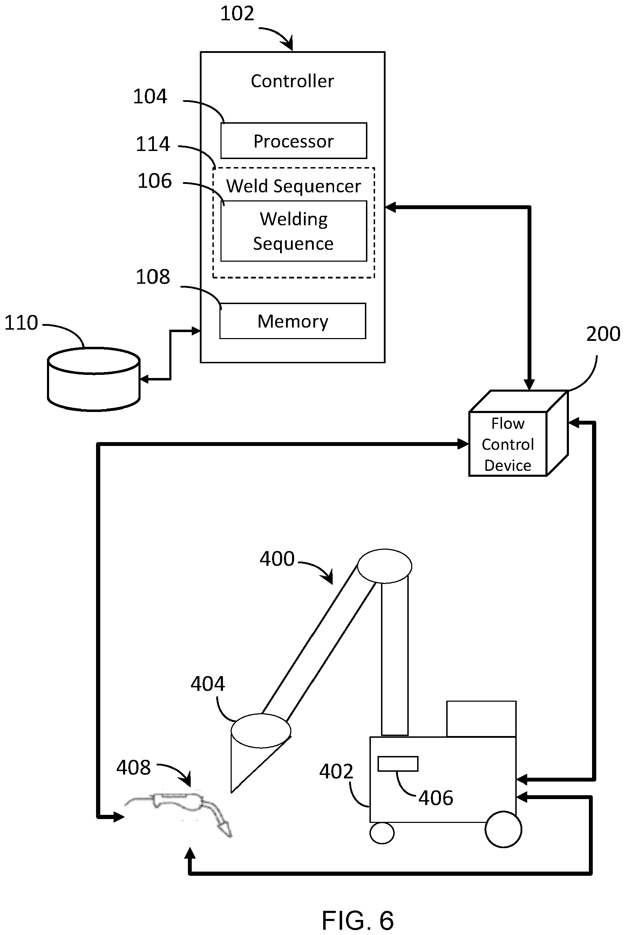

Referring to FIG. 1, in one embodiment, the controller 102 is configured to utilize a welding sequence 106 to regulate the fume extraction flow rate ("flow rate") for at least two welds associated with the welding sequence 106, e.g., when welding an assembly comprising a variety of different welds. In some embodiments, the controller 102 may access a welding sequence 106 that is stored in memory 108. Yet, in another embodiment, the welding sequence 106 may be stored in a remote memory storage device and/or external storage media 110. As explained in greater detail below, a wide variety of arrangements for accessing and/or utilizing the welding sequence 106 to regulate the flow rate are contemplated. In some embodiments, the controller 102 is configured to set a flow control device 200 (as discussed in detail below) to the flow rate corresponding to each weld in the welding sequence during each weld, e.g., during the setup of each weld and/or when performing each weld. In this manner, the controller 102 may comprise logic to determine a setting of the flow control device 200 (e.g., fume extractor fan speed, valve setting, damper position, and the like) for enabling the flow control device 200 to operate at the desired flow rate. For example, the controller 102 could be configured to send an output or signal to the flow control device 200 (e.g., a 4-20mA, 0-10VDC signal output, and the like) that corresponds with a particular setting of the flow control device 200, respectively, so that the flow control device 200 may operate at the desired flow rate. For example, in some embodiments, the controller 102 could send a signal to the flow control device 200 comprising a fume extraction unit (e.g., 402 in FIG. 6) having a motorized fan (e.g., 406 in FIG. 6) to increase or decrease the speed of the fan in accordance with a desired flow rate. Yet, in other embodiments, the controller 102 may be configured to vary the input frequency and voltage of the motorized fan to vary the flow rate. In further embodiments, the controller 102 may communicate a signal to adjust a valve (e.g., a control valve) or damper that is disposed in the flow control device 200 (e.g., provided in a welding fume gun, fume extraction unit, extractor arm, and the like) to vary the flow rate. In certain embodiments, the controller 102 may transmit an intended fume extraction flow rate over a communication protocol such as Modbus, Modbus/TCP, Ethernet/IP, or via a keypad using a display serial interface. In this manner, it is appreciated that a wide variety of arrangements for adjusting the flow rate and/or setting of the flow control device 200 via the controller 102 are contemplated. Although flow control device 200 is shown as a separate device, in various embodiments, the flow control device 200 can be or be integrated with a device, apparatus, and/or system for fume extraction (e.g., a fume extraction unit).

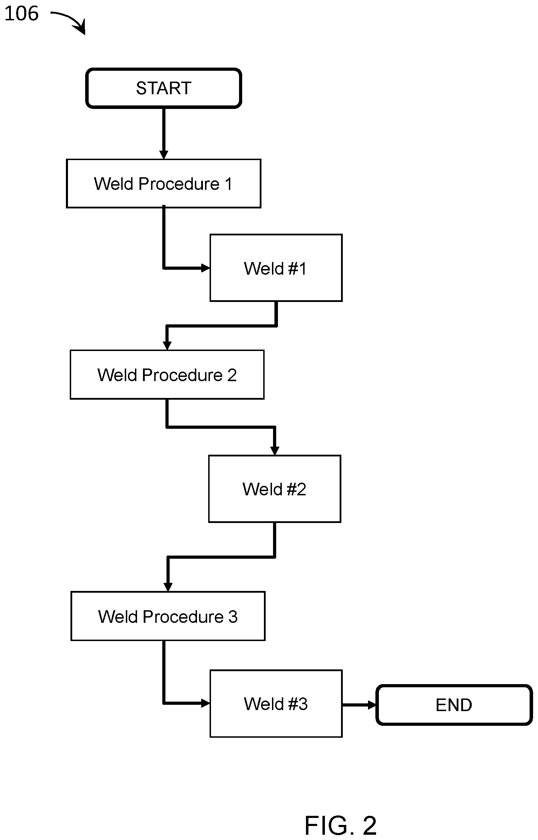

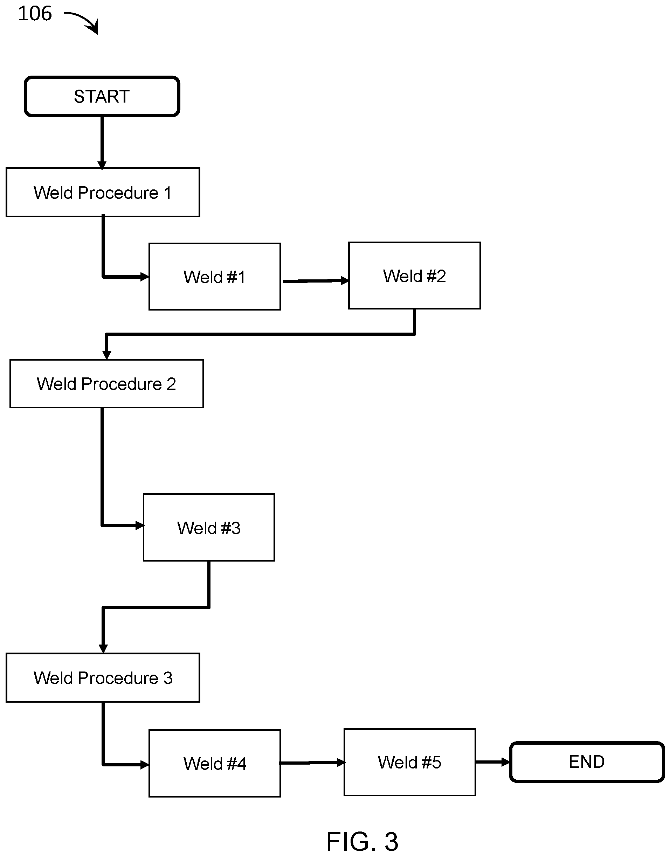

With reference to FIG. 2, the welding sequence 106 may comprise two or more welding procedures. Each welding procedure may comprise weld parameters (discussed in greater detail below) and other work instructions related to creating one or more welds. In the illustrated embodiment, three welding procedures are shown. In some embodiments, each welding procedure may be associated with one or more welds in the welding sequence. Still referring to FIG. 2, an exemplary welding sequence 106 may comprise a first welding procedure related to a first weld, a second welding procedure related to a second weld, and a third welding procedure related to a third weld. However, in another embodiment, each welding procedure may be associated with more than one weld, such as, for example, when two welds are substantially similar in nature (e.g., two identical welds using the same welding wire and power source and/or wire feeder settings, etc.). For example, and referring to FIG. 3, a first welding procedure may be associated with a first and a second weld; a second welding procedure may be associated with a third weld; and a third welding procedure may be associated with a fourth and a fifth weld. In this manner, it should be understood that a welding sequence could embody a variety of forms based on the distinct nature of a welded assembly comprising two or more welds.

Each welding procedure comprises one or more weld parameters associated with creating each of the welds including, but not limited to, a cycle time, a duty cycle, a welding process type (e.g., gas metal arc welding - GMAW; gas tungsten arc welding - GTAW; flux-cored arc welding - FCAW; shielded metal arc welding - SMAW, etc.), a welding wire type, a wire size (e.g., diameter), a wire feed speed, a waveform, an amperage, a voltage, a trim value, a polarity (direct current electrode positive - DCEP; direct current electrode negative - DCEN), a deposition rate, a transfer mode (e.g., short circuit, globular transfer, spray transfer, pulse-spray transfer, etc.) a welding joint configuration (e.g., a corner weld, a butt weld, etc.), a type of base material, a welding power source setting, a wire feeder setting, a welding gun setting, a remote amperage control setting, a remote voltage control setting, a shielding gas flow rate, and a shielding gas composition (e.g., 100% CO₂, Argon/CO₂ blend, etc.).

Each welding procedure includes a flow rate corresponding to the one or more welds associated with the welding procedure. The flow rate is based on the one or more weld parameters related to performing a particular weld. In this manner, each welding sequence 106 includes flow rates that are defined relative to one or more weld parameters so that each flow rate is tailored to each weld in the welding sequence 106. For instance, for a welding sequence 106 comprising two welds, the controller 102 utilises the welding sequence 106 to set the flow control device 200 to a first flow rate during the first weld of the welding sequence, and set the flow control device 200 to a second flow rate during the second weld of the welding sequence. The welding sequence 106 may comprise a first welding procedure that includes a first weld parameter and a second welding procedure that includes a second weld parameter. The first welding procedure includes the first flow rate based on the first weld parameter and the second welding procedure includes the second flow rate based on the second weld parameter. In this manner, each fume extraction flow rate is defined with respect to the unique attributes or characteristics (e.g., one or more weld parameters) associated with creating each weld.

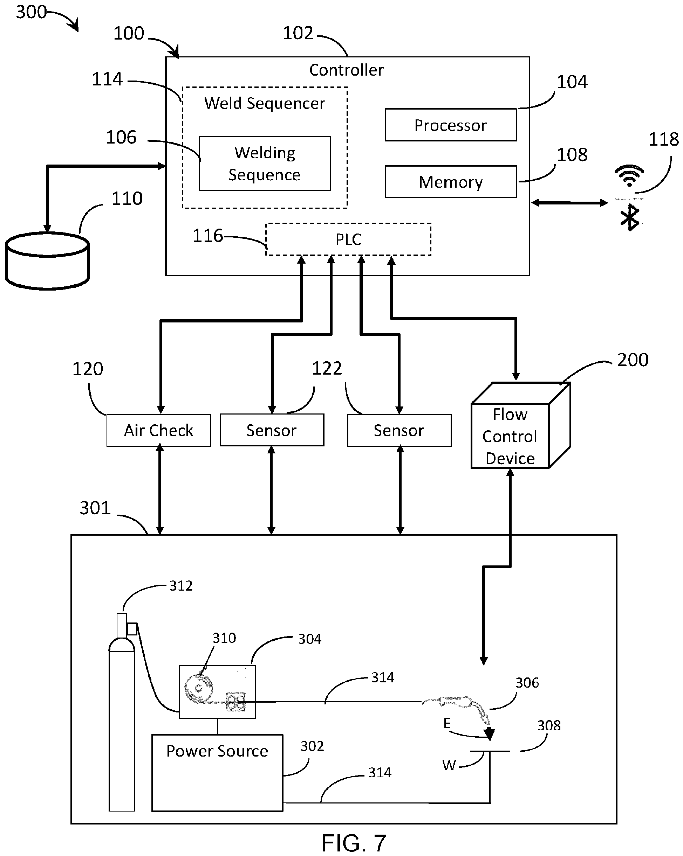

In some embodiments, the flow rates associated with the welding procedures and welds may comprise nominal flow rates or settings, such that actual or target flow rates may be determined "on-the-fly" (e.g., in real time or near real time) during welding based on operator selections/settings and/or various types of feedback (e.g., via sensors 122 of FIG. 7, a weld score, etc.), as discussed in more detail below. In various embodiments, nominal flow rates can be based on, for example, average, minimum, expected, etc. flow rates, and actual or target flow rates can be based on the nominal flow rate combined with customized operator settings and/or feedback, wherein an adjustment is made to the nominal setting based on the operator settings and/or feedback to determine the actual or target setting.

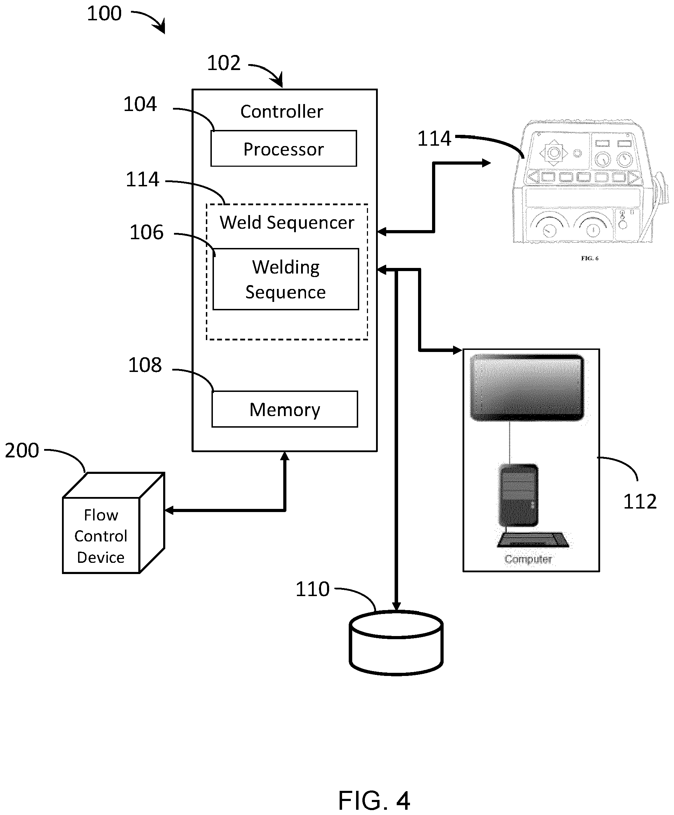

Referring to FIG. 4, in some embodiments, the welding sequence 106 may reside in the memory 108 of the controller 102 and comprise computer readable media such as communication media (e.g., computer readable instructions) that may be accessed by the controller 102, respectively, for regulating the flow control device 200 in accordance with the flow rates defined in the welding sequence 106. In some embodiments, the memory 108 may include one or more files associated with one or more assemblies that are routinely welded by a manufacturer and/or fabricator (e.g., part numbers, model numbers, serial numbers, and the like). In such instances, each file may include a welding sequence 106 that defines a flow rate for each weld of a particular assembly.

In certain embodiments, the welding sequence 106 may also reside in a remote memory storage device and/or external storage media 110. For example, in some embodiments, the external storage media 110 may also be associated with a particular assembly (e.g., serial number, model number, etc.). In this manner, the controller 102 could execute instructions in accordance with a welding sequence 106 that resides in the external storage media 110 for setting the flow control device 200 to a desired flow rate for each weld in the welding sequence 106.

As discussed above, the external storage media 110 may include, but is not limited to, RAM, ROM, EEPROM, flash memory or other memory technology, CD-ROM, digital versatile disks (DVD) or other magnetic storage devices, or any other medium that can be accessed by controller 102. However, in certain embodiments, the external storage media 110 may comprise a data store that resides in a remote location or server (e.g., on the cloud) for enabling a weld operator to access a welding sequence 106 associated with a welded assembly via a wide area network, such as the Internet.

Still referring to FIG. 4, the controller 102 may comprise an exemplary weld sequencer component 114 that is configured to control welding equipment (e.g., for adjusting settings such as voltage, wire feed speed, trim, etc.) for performing a welding sequence 106 associated with creating two or more welds. In another embodiment, the weld sequencer component 114 may also be configured to control a setting of the flow control device 200, respectively, so that the flow control device 200 regulates the fume extraction flow in accordance with a desired flow rate associated with a weld in the welding sequence. In other embodiments, the weld sequencer component 114 may be a cloud-based software that comprises logic to determine a flow rate based on the weld parameters (and/or feedback) associated with two or more welds. Yet, in other embodiments, the weld sequencer component 114 may be a standalone component, embedded in the controller 102, comprise a portion of the controller 102, or embody the entire of controller 102.

In another embodiment, the controller 102 may determine a flow rate based on the one or more weld parameters associated with a welding procedure. For example, the controller 102 may utilize a welding sequence 106 that defines at least a first welding procedure to create a first weld and a second welding procedure to create a second weld, respectively, for determining a first flow rate for the first weld and a second flow rate for the second weld. In this embodiment, the first flow rate may be determined based on a first weld parameter associated with the first welding procedure, and the second flow rate may be determined based on a second weld parameter associated with the second welding procedure. In this manner, the controller 102 may comprise logic to interpret one or more weld parameters associated with a welding procedure to determine a flow rate corresponding to each weld and/or welding procedure. Yet, as discussed above, in other embodiments, the controller 102 may also be configured to adjust the setting of the flow control device 200 (e.g., fan speed, valve setting, damper position, and the like) to attain the desired flow rate.

In further embodiments, the controller 102 may execute one or more computer implementable instructions (e.g., an algorithm) to determine a flow rate based on the one or more weld parameters associated with a particular welding procedure, including, for example, variable/selectable inputs, and in some embodiments, feedback during welding (including, e.g., from sensors, a weld score, etc.). (The weld score or weld scoring feature can include the techniques described in US Pat. No. 8,884,177, which is incorporated herein by reference in its entirety.) For example, if the system monitors a drop in the weld score feedback, it can reduce the fume extraction flow. In another example, if a welding procedure associated with a weld defines a certain voltage (e.g., 24V for a GMAW spray transfer process), and the weld that is being performed is an in-corner weld (e.g., a weld configuration comprising an intersection of three planes), the controller 102 may comprise logic to interpret the input corresponding to the voltage value (24 V) and the weld configuration (in-corner weld) to determine a flow rate that corresponds with the weld parameters (e.g., the voltage and particular configuration). In this respect, it should be appreciated that a variety of weld parameters may be utilized by the controller 102 to determine the flow rate, such as, for example, any type of weld parameter described in the present application (as described above).

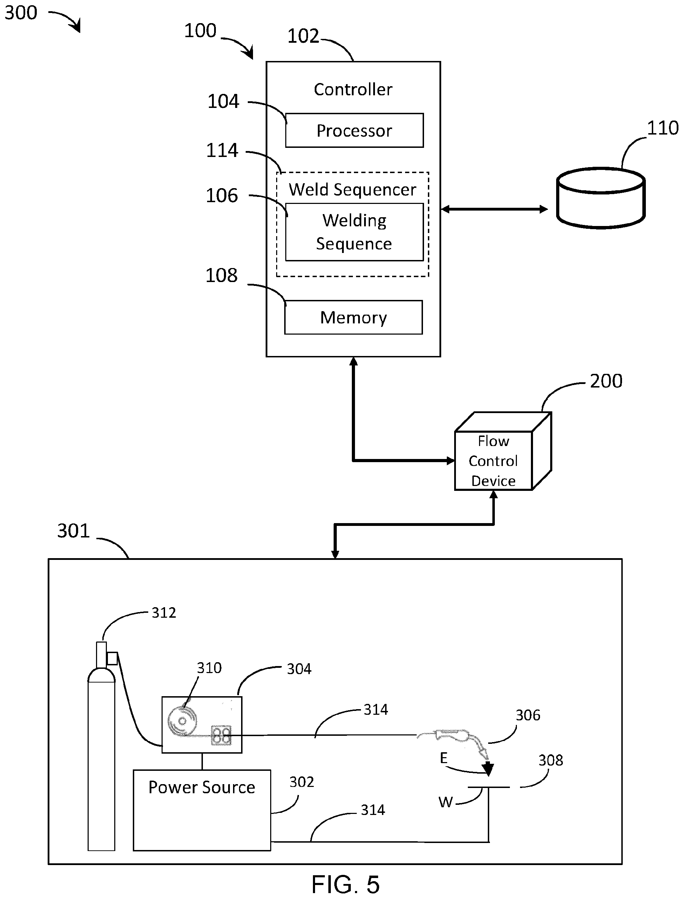

Still referring to FIG. 4, exemplary user interfaces 112 and 114 for interacting with an exemplary fume extraction control system 100 are shown. In one embodiment, a weld operator (e.g., welder, welding supervisor) may interact with a welding power source (e.g., 302 in FIG. 5) via a user interface 114 that can be an integral part of the welding power source. In this embodiment, the user interface 114 can be operable to select one or more settings associated with a weld. In this embodiment, the controller 102 may be operatively coupled to the welding power source and configured to determine a flow rate based on the one or more selections/settings made via the user interface 114. In some embodiments, an operator's selection could comprise a weld parameter, such as, for example, any type of weld parameter described in the present application. In this manner, the controller 102 may comprise logic to determine a flow rate based on the one or more weld parameters that are associated with the operator's selection.

Yet, in other embodiments, the operator's selection may comprise work data associated with an assembly. For instance, work data may comprise identifying information (e.g., a part number, a serial number, a model number, and the like) associated with the assembly. In such embodiments, the controller 102 may analyze the work data (e.g., via a query) to retrieve a welding sequence 106 associated with the work data from the system's memory 108 and/or external storage media 110. For example, the controller 102 may associate the work data with a specific welding sequence 106 that is routinely utilized for producing the assembly, such as, for example, when a manufacturer or fabricator produces multiple units of the assembly to meet reoccurring customer demand.

In some embodiments, the controller 102 may be operatively connected to a remote user interface 112 such as, for example, a laptop, a desktop, a smart phone, a tablet, or other computer device that is connected to the controller 102 via a wireless network (e.g., LAN or WAN) or physical connection. In some embodiments, the controller 102 can be configured to determine a flow rate via a lookup table (e.g., residing in the memory 108 and/or in the external storage media 110) that includes suggested flow rate values corresponding to the one or more selections made via the user interface 112. For example, an operator's selection of a certain welding process type (e.g., FCAW) could prompt the controller 102 to select a suggested flow rate setting that is higher than the suggested flow rate setting associated with another type of welding process (e.g., TIG). As another example, an operator's selection of a different setting (e.g., an increased voltage value) could result in a higher flow rate setting versus an original setting (e.g., a lower voltage value). In some embodiments, an operator may send a welding sequence 106to the controller 102 via the user interface (e.g., 112 in FIG. 4) such that the controller 102 determines a flow rate for each of the plurality of welds associated with a welding sequence 106. Yet, in further embodiments, the controller 102 may configure the flow control device 200 (e.g., fan speed, valve setting, damper position, and the like) to operate at the flow rate that is based on the operator's selection made via the user interface (112 or 114), e.g., a flow rate that is determined based on the operator's selection.

FIG. 5 illustrates an exemplary welding system 300 according to an exemplary embodiment. In this embodiment, exemplary welding system 300 includes a welding work cell 301 that is operatively connected to a fume extraction control system 100. It is appreciated that the welding system 300 may embody one or more welding work cells 301, wherein each welding work cell 301 is configured to produce welds or welded assemblies. In some embodiments, a single fume extraction control system 100 may be operatively connected to one or more welding work cells 301. Yet, in other embodiments, each welding work cell 301 may be retrofitted with a fume extraction control system 100. Exemplary welding work cell 301 includes a welding power source 302, a wire feeder 304, and a welding gun 306 that is utilized to perform one or more welds on a workpiece or welded assembly 308. Exemplary welding system 300 further includes a spool of welding wire 310, a shielding gas supply source 312, and welding cable 314 for defining a welding circuit that runs from the welding power source 302 through the welding cable 314 to the workpiece and/or workpiece connector (e.g., earth ground clamp), to the welding gun 306 (e.g., toward the welding gun electrode, "E"; reverse polarity for GMAW), and back through the welding cable 314 to the welding power source 302. During welding, electrical current runs through the welding circuit path as voltage is applied to the welding circuit path.

In the illustrated embodiment, the exemplary welding work cell 301 is configured to perform a GMAW process (i.e., MIG welding) with a welding gun 306, a power source 302, and a wire feeder 304. However, it should be appreciated that other types of welding configurations are also contemplated (e.g., a power source and an electrode holder or a welding torch). In this manner, the welding work cell 301 could be configured to perform a variety of welding processes, such as, for example, shielding metal arc welding SMAW, FCAW, pulsed MIG, TIG, and the like. In some exemplary embodiments, the welding gun 306 may comprise a welding fume gun (e.g., 408 in FIG. 6) that is configured to produce welds and extract welding fumes near the source of their creation, e.g., in the vicinity of a molten weld puddle. In such embodiments, the welding fume gun may comprise welding consumables (e.g., contact tip, nozzle, diffuser, conductor tube, etc.), a liner (for guiding welding wire), and an integrated vacuum chamber and/or hose that is operatively connected to a fume extraction unit (e.g., 402 in FIG. 6).

It is also to be appreciated that the welding work cell 301 may comprise various system arrangements, including automatic, semi-automatic, on-site, and/or manual welding systems with similar components. Moreover, a person of skill in the art should understand that fume extraction control system of the present application may also be adapted to extract fumes and particulate produced by other fabrication processes, including, but not limited to, thermal cutting (e.g., oxy-fuel cutting), plasma cutting, laser-cutting, and the like.

Still referring to FIG. 5, in one embodiment, the flow control device 200 is operatively connected to the welding work cell 301, respectively, so that the flow control device 200 can extract welding fumes generated within the welding work cell 301. Referring to FIG. 6, the flow control device 200 can take on multiple forms, such as, for example, a static fume extraction system 400 comprising a fume extraction unit 402 and a fume extraction arm 404. Examples of commercially available fume extraction units include those produced by the Lincoln Electric Company, such as, for example, Lincoln Electric's X-Tractor^{®}, MobiFlex^{®}, and Statiflex^{®} product platforms.

In such embodiments, the fume extraction system 400 may include a motor 406 that is configured to actuate a motorized fan (not shown) that generates a negative pressure/draft (i.e., fume extraction flow) through the arm 404 and through a vacuum filter (not shown) for withdrawing welding fumes and particulate generated in the vicinity of the arm 404. As discussed above, the controller 102 may send signals to the motor 406 (e.g., a variable frequency drive) to regulate the motor 406 fan speed in accordance with the desired flow rate (e.g., a first flow rate during a first weld of the welding sequence, a second flow rate during a second weld of the welding sequence, etc.).

In some embodiments, the flow control device 200 may comprise a welding fume gun 408 that is operatively connected to the controller 102 and to the fume extraction unit 402. As discussed above, the welding fume gun 408 may be configured to perform welds and withdraw welding fumes through a fume extraction chamber and/or hose (not shown) disposed in the welding fume gun 408. In such embodiments, the fume extraction chamber/and or hose can be operatively connected to the fume extraction unit 402 such that the fume extraction unit 402 produces a negative draft/pressure through the chamber and/or hose, respectively. In some embodiments, the welding fume gun 408 may also be retrofitted to include a flow control device 200. For example, in some embodiments, the welding fume gun 408 may include a flow control device 200 comprising an actuated valve or damper (not shown) that is configured to vary the size of the flow opening in response to signals sent by the controller 102 to the welding fume gun 408. In this manner, the controller 102 may set the flow control device 200 associated with the welding fume gun 408 to a fume extraction flow rate setting (e.g., valve setting or damper position, etc.) in accordance with the flow rate designated for the weld in the welding sequence. In some embodiments, the flow control device 200 may comprise other exemplary components(e.g., a VFD fan, a control valve, a smart valve, , a positioner, an actuator for modulating a valve or a damper, etc.) of the welding fume gun 408 or the fume extraction unit 402. In some embodiments, the flow control device 200 may comprise a retrofittable component (e.g., a actuator, a VFD fan, etc.) of the welding fume gun 408 or the fume extraction unit 402, respectively, so that the welding fume gun 408 or the extraction unit 402 are capable of regulating the flow rate in response to signals sent by the controller 102. However, it is also contemplated that in certain embodiments, the flow control device 200 may comprise a downdraft table, an extraction hood, a weld booth, an air purifying respirator, and the like.

Referring now to FIG. 7, in one embodiment, the controller 102 may be operatively connected to one or more sensors 122 for monitoring one or more aspects of the welding system 300. In some embodiments, each sensor 122 may be configured to monitor weld data during a weld, including, but not limited to: a cycle time, a duty cycle, a welding process type, a welding wire type, a wire size, a wire feed speed, a waveform, an amperage, a voltage, a trim value, a polarity, a deposition rate, a transfer mode, a welding joint configuration, a type of base material(e.g., cold rolled steel, stainless, aluminum, etc.), a welding power source setting, a wire feeder setting, a welding gun setting, a remote amperage control setting, a remote voltage control setting, fume data, air quality data, a shielding gas flow rate, a shielding gas composition, an image of the weld and/or a video of the weld (e.g., via a video stream or image recognition technology). Moreover, it should be understood that in certain embodiments the weld data may comprise some or all of the weld parameters described herein. In some embodiments, the weld data may be transmitted to the controller 102 by the sensors 122 and stored in the memory 108 of the controller 102 or in the external storage media 110.

According to one embodiment, the controller 102 may comprise logic to determine a flow rate based on the weld data that is transmitted to the controller 102 by the one or more sensors 122. For example, a sensor 122 may be connected to the power source 302 for monitoring voltage during a weld such that the controller 102 may determine a flow rate in accordance with the recorded voltage value. In such embodiments, the controller 102 may then send a signal to the flow control device 200 to set the flow control device 200 to the determined flow rate, thereby exemplifying a closed loop control system. In some embodiments, as discussed above, feedback from a sensor 122 may be used to adjust a nominal flow rate specified in the welding sequence 106. In another embodiment, the controller 102 may comprise logic to determine a flow rate based on other weld data associated with the welding system 300, such as, for example, the measured shielding gas flow rate and/or shielding gas composition, respectively. In yet another embodiment, the controller 102 may monitor the welding wire type 310 (e.g., machine and/or wire feeder setting) that is being used to perform a weld to determine a flow rate based on the type of welding wire (e.g., stainless steel, mild steel, aluminum, etc.). However, it should also be appreciated that the controller 102 may monitor the type of base material that is being welded (e.g., based on a machine and/or user interface setting) to determine a flow rate with respect to the base material. Additionally, in some embodiments, the controller 102 may disable and lock the welding power source 302 if the controller 102 does not detect a signal from the flow control device 200, such as, for example, if the flow control device 200 is turned off or inoperative due to maintenance such as, for example, a filter replacement. Yet, in further embodiments, the controller 102 may comprise logic to decrease the flow rate when the welding power source 302 is inactive for energy conservation purposes. In this manner, it should be understood that a wide variety of arrangements for monitoring and transmitting weld data during a weld are contemplated for controlling the flow control device 200 or the welding power source 302.

In some embodiments, the controller 102 may be operatively connected to an air check component 120 that is configured to monitor the fume data generated during the welding process. In certain embodiments, the air check component 120 may comprise a sensor that monitors the fume data to detect the level of airborne contaminants in the air. In this manner, the air check component 120 may include an analyzer having a probe for monitoring the level of airborne contaminants. In some embodiments, the controller 102 may assess the fume data relative to permissible exposure limits set forth by a government agency. In some embodiments, the controller 102 may create a notification if the fume data has surpassed a predetermined threshold value. In other embodiments, the controller 102 may be configured to create and send the notification to a welder or weld operator. For example, the controller 102 may be operatively connected to a welder's helmet (not shown) and configured to provide the welder an audio alarm and/or a visual notification if the fume data has surpassed a predetermined threshold value. In this way, it is also contemplated that a welding helmet may be configured to operate with the controller 102 for providing a welder a real time indication of the air quality in the welding system 300. In another embodiment, it is also contemplated that the controller 102 may send a signal to the welder's helmet to notify the welder that it is time to replace the filter (e.g., filter end of life), or if there is an insufficient flow rate relative to the fume data. In other embodiments, the controller 102 may increase the flow rate in response to an indication that the fume data has surpassed a predetermined threshold value.

Still referring to FIG. 7, in some embodiments, the controller 102 may comprise a programmable logic controller (PLC) that is in communication with the one or more sensors 122, the air check component 120, and/or the flow control device 200 for monitoring the welding system 300 (e.g., via 4-20mA input signals) such that the controller 102 (the processor 104) may interpret the input signals transmitted from the sensors 122, the air check component 120, and/or the flow control device 200 to determine a flow rate and/or flow rate setting of the flow control device 200. In some embodiments, the controller 102 may access a data store residing on the cloud to retrieve a flow rate that is based on the weld data transmitted from the sensors 122 and/or the air check component 120 during each weld. In some embodiments, the controller 102, the sensors 122, the air check component 120, and/or the flow control device 200 may communicate via known wireless technology 118, e.g., a Wi-Fi network and/or via Bluetooth technology.

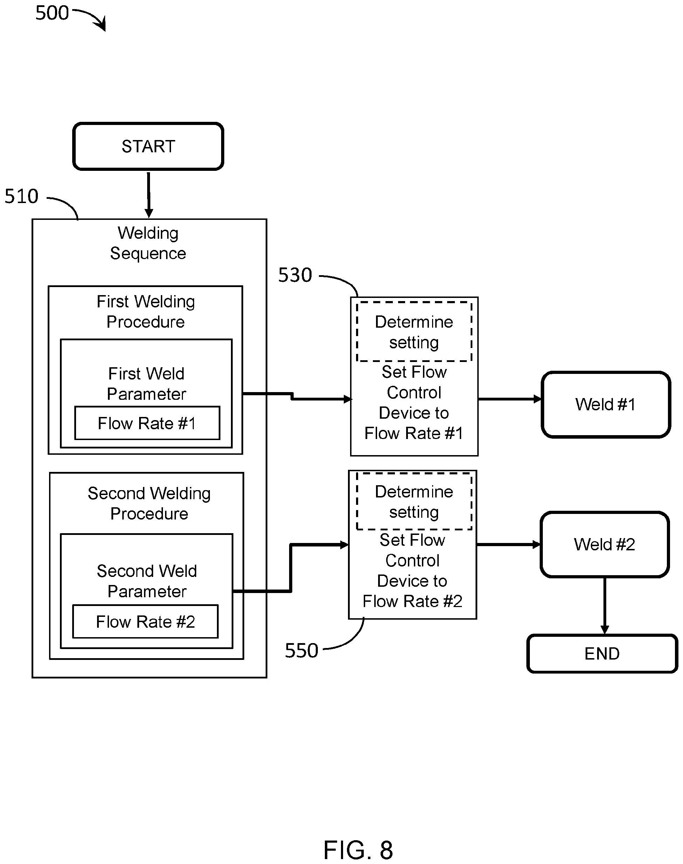

FIG. 8 shows an exemplary method 500 of utilizing a welding sequence associated with creating at least two welds to set a flow control device employing any of the apparatuses, systems, devices, components, and/or configurations described above. First at step 510, the method includes obtaining or accessing a welding sequence. For example, the welding sequence may be accessed from memory, a data store, or from external storage media. In this embodiment, the welding sequence may define at least a first welding procedure to create a first weld including a first weld parameter and a second welding procedure to create a second weld including a second weld parameter. However, it should be understood that any of the exemplary methodologies described herein are also operative with three or more welding procedures related to creating three or more welds.

Still referring to FIG. 8, in this embodiment, the first welding procedure includes a first flow rate based on the first weld parameter and the second welding procedure includes a second flow rate based on the second weld parameter. Next, at step 530, the method sets a flow control device to the first flow rate during the first weld of the welding sequence. Then, at step 550, the method sets the flow control device to the second flow rate during the second weld of the welding sequence. In this manner, it is appreciated that the method may also determine a setting of the flow control device that corresponds to the first and second flow rates, respectively.

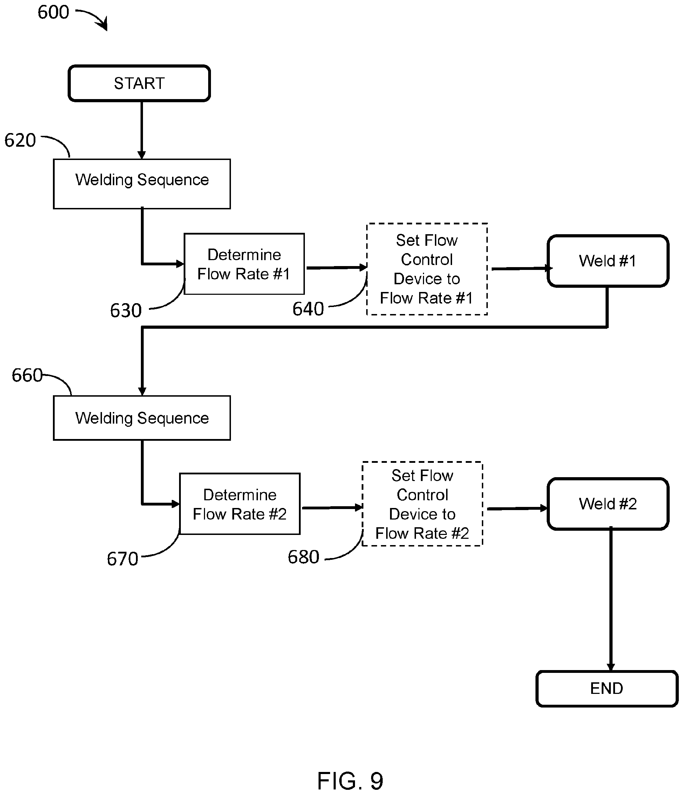

FIG. 9 shows another exemplary method 600 of utilizing a welding sequence associated with creating at least two welds to determine a flow rate. First, at step 620, the method includes obtaining or accessing a welding sequence. Like exemplary method 500, the welding sequence may define at least a first welding procedure to create a first weld including a first weld parameter and a second welding procedure to create a second weld including a second weld parameter. Then, at step 630, the method includes determining a first flow rate based on the first weld parameter during the first weld of the welding sequence. In some embodiments, the method may also include a step 640 for setting a flow control device to the first flow rate during the first weld. Next, at step 660, the method includes utilizing the welding sequence to determine a second flow rate. More specifically, at step 670, the method includes determining a second flow rate based on the second weld parameter that is associated with a second welding procedure of the welding sequence. As with the first weld, in some embodiments, the method may also include the step 680 of setting a flow control device to the second flow rate during the second weld of the welding sequence.

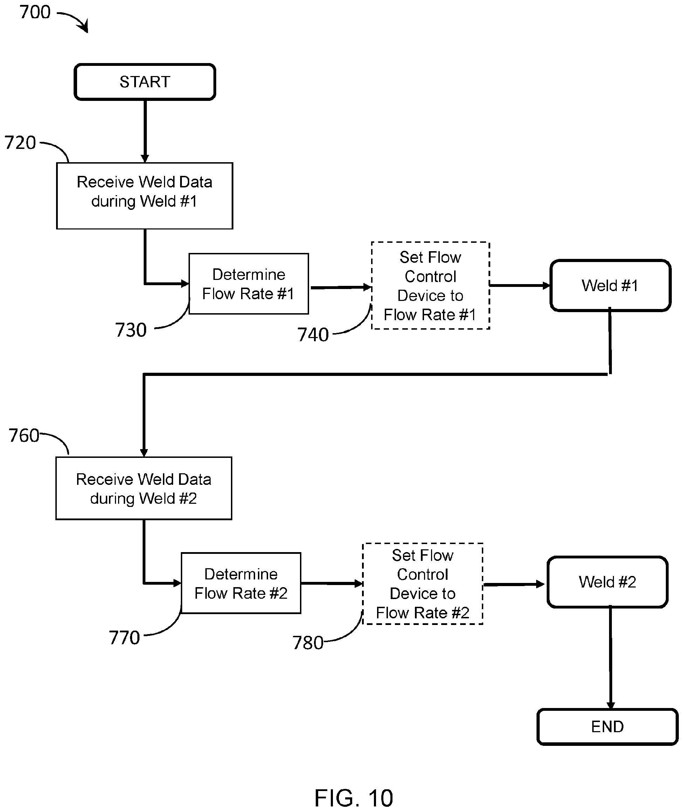

However, it should be understood that in alternative embodiments, the method may also include utilizing one or more sensors for monitoring a welding system for receiving weld data during a weld to determine a flow rate based on the weld data. For example, the weld data may comprise any form of weld data and/or feedback described in the present application. In certain embodiments, the weld data may also comprise any form of a weld parameter described herein. For example, and referring to FIG. 10, in some embodiments, an exemplary method 700 may include receiving weld data 720 during a weld via sensors and/or components (e.g., sensors 122 and/or air check component 120 in FIG. 7). Next, at step 730, the method includes determining a first flow rate (i.e., flow rate #1) based on the weld data. In some embodiments, this determination is also based on or made relative to a nominal flow rate. Then, in some embodiments, the method may also include the step 740 of setting a flow control device to the first flow rate during the first weld. Next, at step 760, the method includes receiving additional weld data, such as, for example, updated weld data during a second weld. Then, at step 770, the method includes determining a second flow rate (i.e., flow rate #2). Next, in some embodiments, the method may include the step 780 of setting a flow control device to the second flow rate during the second weld. In this manner, the method of FIG. 10 is particularly advantageous for determining a fume extraction flow rate and/or flow control device setting in real time based on the concurrent monitoring of weld data during a weld.

As discussed above, in some embodiments, the weld data may comprise fume data pertaining to welding fumes generated during the welding process, such as, for example, data related to the level of airborne contaminants in the air. In some embodiments (not shown), the method may also include comparing fume data to a predetermined threshold and creating and/or sending a notification (e.g., to a welder) if the fume data surpasses the predetermined threshold.

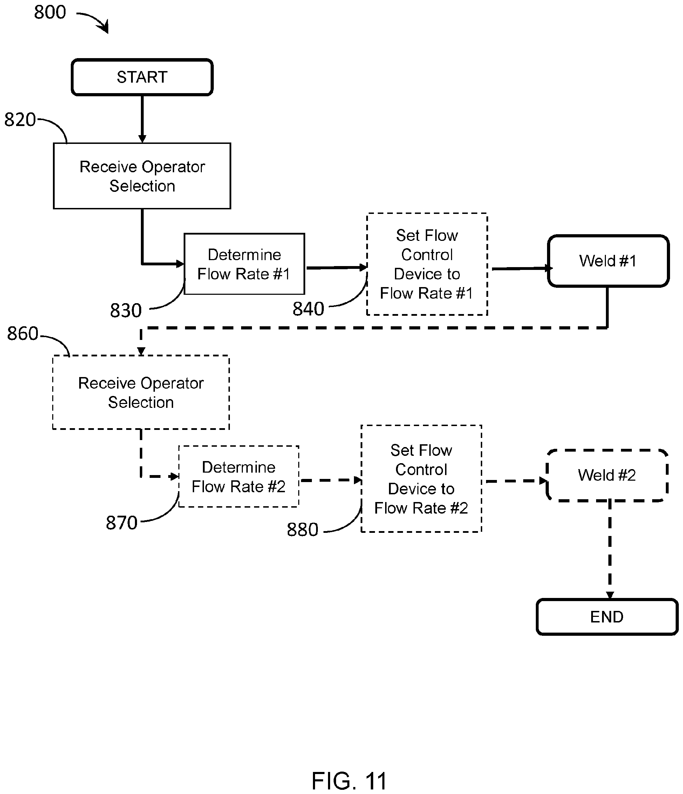

Referring to FIG. 11, another exemplary method 800 of determining a flow rate is shown. In this embodiment, the method includes the step 820 of receiving an operator selection via any form of user interface as described herein (e.g., 112 or 114 in FIG. 4). Then, at step 830, the method includes determining a first flow rate based on the operator selection. In some embodiments, the operator selection may comprise a weld parameter associated with a welding sequence, such as, for example, any type of a weld parameter described herein. Next, at step 840, the method may also include determining a flow rate setting of a flow control device to coincide with the first flow rate. As illustrated by steps 860-880 of the flow chart, the method may repeat itself, such as, for example, when an operator makes another selection during a second weld.

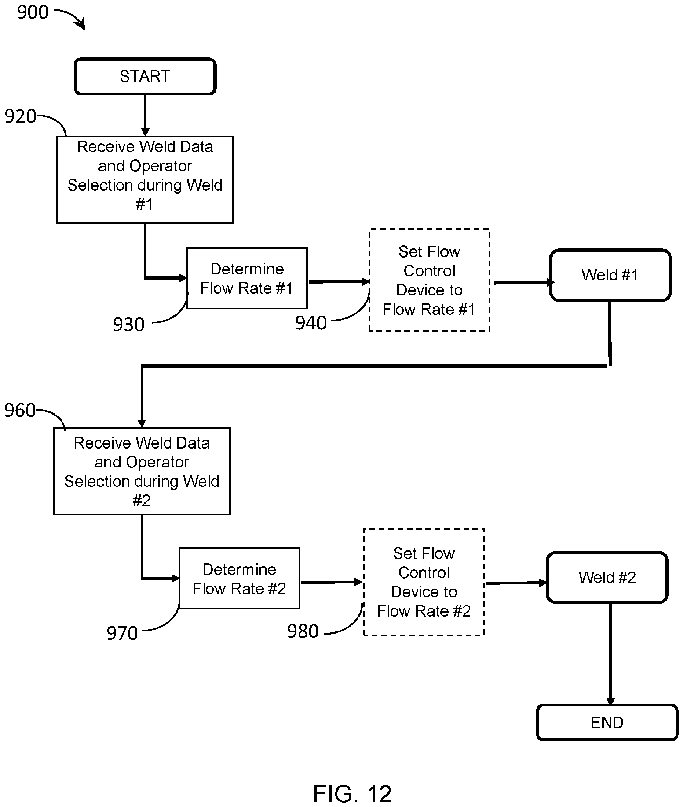

Referring now to FIG. 12, another exemplary method 900 of determining a flow rate is shown. In this embodiment, exemplary method 900 may include receiving weld data and operator selections/settings 920 during a first weld, such as, for example, any form of weld data and operator selections described herein, e.g., feedback from the sensors 122 of FIG. 7, operator selections made via the user interface 114 of FIG. 4, etc. Next, at step 930, the method includes determining a first flow rate (i.e., flow rate #1) based on the weld data and operator selections. In some embodiments, this determination is also based on or made relative to a nominal flow rate. Then, in some embodiments, the method may also include the step 940 of setting a flow control device to the first flow rate. Next, at step 960, the method includes receiving updated weld data and operator selections during a second weld. Then, at step 770, the method includes determining a second flow rate (i.e., flow rate #2). Next, in some embodiments, the method may also include the step 980 of setting a flow control device to the second flow rate. As discussed above, the weld data may comprise fume data pertaining to welding fumes generated during the welding process. In some embodiments, the method may also include comparing fume data to a predetermined threshold and sending a notification (e.g., to a welder) if the fume data surpasses a predetermined threshold.

While the embodiments discussed herein have been related to the systems and methods discussed above, these embodiments are intended to be exemplary and are not intended to limit the applicability of these embodiments to only those discussions set forth herein. The control systems and methodologies discussed herein may be equally applicable to, and can be utilized in, systems and methods related to arc welding, laser welding, brazing, soldering, plasma cutting, waterjet cutting, laser cutting, and any other systems or methods using similar control methodology, without departing from the spirit of scope of the above discussed inventions. The embodiments and discussions herein can be readily incorporated into any of these systems and methodologies by those of skill in the art.

While the present invention has been illustrated by the description of embodiments thereof, and while the embodiments have been described in some detail, it is not the intention of the applicant to restrict or in any way limit the scope of the appended claims to such detail. Additional advantages and modifications will readily appear to those skilled in the art. Therefore, the invention in its broader aspects is not limited to the specific details, representative apparatus and methods, and illustrative examples shown and described, but rather more by the scope of the invention as defined in the appended claims.

## Claims

1. A method of controlling fume extraction, comprising:
utilizing a welding sequence (106) associated with at least two welds, wherein the welding sequence (106) defines at least a first welding procedure to create a first weld including a first weld parameter and a second welding procedure to create a second weld including a second weld parameter;
wherein the first welding procedure includes a first flow rate, and wherein the second welding procedure includes a second flow rate;
setting a flow control device (200) associated with fume extraction to the first flow rate during the first weld of the welding sequence (106); and
setting the flow control device (200) to the second flow rate during the second weld of the welding sequence (106),
**characterized in that** the first flow rate is based on the first weld parameter and the second flow rate is based on the second weld parameter,
wherein the first weld parameter and the second weld parameter are based on at least one of: a cycle time, a duty cycle, a welding process type, a welding wire type, a wire size, a wire feed speed, a waveform, an amperage, a voltage, a trim value, a polarity, a deposition rate, a transfer mode, a welding joint configuration, a type of base material, a welding power source setting, a wire feeder setting, a welding gun setting, a remote amperage control setting, a remote voltage control setting, a shielding gas flow rate, or a shielding gas composition.

2. The method of claim 1, further comprising:
determining a setting of the flow control device (200) based on the first flow rate during the first weld of the welding sequence (106); and
determining a setting of the flow control device (200) based on the second flow rate during the second weld of the welding sequence (106).

3. The method of any of the previous claims, further comprising:
determining the first flow rate based on the first weld parameter; and
determining the second flow rate based on the second weld parameter.

4. The method of any of the previous claims, further comprising:
receiving weld data based on the first weld or the second weld, wherein the weld data is based on at least one of: a cycle time, a duty cycle, a welding process type, a welding wire type, a wire size, a wire feed speed, a waveform, an amperage, a voltage, a trim value, a polarity, a deposition rate, a transfer mode, a welding power source setting, a wire feeder setting, a welding gun setting, a remote amperage control setting, a remote voltage control setting, fume data, air quality data, a shielding gas flow rate, a shielding gas composition and
determining the first flow rate or the second flow rate based on the weld data; preferably further comprising:
wherein the weld data comprises the fume data;
comparing the fume data to a predetermined threshold; and
creating a notification if the fume data surpasses the predetermined threshold.

5. The method of any of the previous claims, further comprising:
receiving at least one operator selection associated with the first weld or the second weld; and
determining the first flow rate or the second flow rate based on the at least one operator selection.

6. A system for performing fume extraction, comprising:
a controller comprising a processor and a memory,
**characterised in that** the controller
comprises logic to:
utilize a welding sequence (106) associated with at least two welds, wherein the welding sequence (106) defines at least a first welding procedure to create a first weld including a first weld parameter and a second welding procedure to create a second weld including a second weld parameter;
wherein the welding procedure includes a first flow rate, and wherein the second welding procedure includes a second flow rate;
set a flow control device (200) associated with fume extraction to the first flow rate during the first weld of the welding sequence (106); and
set the flow control device (200) to the second flow rate during the second weld of the welding sequence (106),
wherein the first flow rate is based on the first weld parameter and the second flow rate is based on the second weld parameter
wherein the first weld parameter and the second weld parameter are based on at least one of: a cycle time, a duty cycle, a welding process type, a welding wire type, a wire size, a wire feed speed, a waveform, an amperage, a voltage, a trim value, a polarity, a deposition rate, a transfer mode, a welding joint configuration, a type of base material, a welding power source setting, a wire feeder setting, a welding gun setting, a remote amperage control setting, a remote voltage control setting, a shielding gas flow rate, or a shielding gas composition.

7. The system of claim 6, wherein the controller further comprises logic to:
determine a setting of the flow control device (200) based on the first flow rate; and
determine a setting of the flow control device (200) based on the second flow rate,
wherein the controller preferably further comprises logic to:
determine the first flow rate based on the first weld parameter; and
determine the second flow rate based on the second weld parameter.

8. The system of claim 6 or 7, wherein the controller further comprises:
a weld sequencer that is configured to set the flow control device (200) to the first flow rate during the first weld and set the flow control device (200) to the second flow rate during the second weld.

9. The system of any of the claims 6-8, wherein the system further comprises:
at least one sensor for receiving weld data based on the first weld or the second weld;
wherein the weld data comprises at least one of: a cycle time, a duty cycle, a welding process type, a welding wire type, a wire size, a wire feed speed, a waveform, an amperage, a voltage, a trim value, a polarity, a deposition rate, a transfer mode, a welding power source setting, a wire feeder setting, a welding gun setting, a remote amperage control setting, a remote voltage control setting, fume data, air quality data, a shielding gas flow rate, a shielding gas composition; and
wherein the controller is configured to determine the first flow rate or the second flow rate based on the weld data.
wherein the controller preferably comprises logic to accesses a data store for retrieving the first flow rate or the second flow rate based on the weld data and/or the controller is further configured to create a notification if the fume data surpasses a predetermined threshold.

10. The system of any of the claim 6-9, wherein the controller further comprises a welding power source controller that is configured to modify electrical characteristics of a welding power source.

11. The system of any of the claims 6-10, wherein the flow control device (200) comprises a retrofittable component of one of: a fume extraction system and a welding fume gun, and/or wherein the flow control device (200) comprises a fan motor provided in a fume extraction system, the fan motor being operable to regulate a motor fan speed in accordance with the first flow rate and the second flow rate.

12. The system of any of the claims claim 6-11, wherein the controller is configured to disable the welding power source when the flow control device (200) is turned off.

13. The system of any of the claims 6-12, wherein the system further comprises a user interface that is configured to receive at least one operator selection associated with the first weld or the second weld; and
wherein the controller further comprises logic to determine the first flow rate or the second flow rate based on the at least one operator selection.

## Patentansprüche

1. Verfahren zum Steuern eines Rauchabzugs, umfassend:
Verwenden einer Schweißsequenz (106), die mindestens zwei Schweißungen zugeordnet ist, wobei die Schweißsequenz (106) mindestens einen ersten Schweißvorgang, um eine erste Schweißung zu erzeugen, die einen ersten Schweißparameter einschließt, und einen zweiten Schweißvorgang definiert, um eine zweite Schweißung zu erzeugen, die einen zweiten Schweißparameter einschließt;
wobei der erste Schweißvorgang einen ersten Durchsatz einschließt, und wobei der zweite Schweißvorgang einen zweiten Durchsatz einschließt;
Einstellen einer Durchsatzsteuervorrichtung (200), die dem Rauchabzug zugeordnet ist, auf den ersten Durchsatz während der ersten Schweißung der Schweißsequenz (106); und
Einstellen der Durchsatzsteuervorrichtung (200) auf den zweiten Durchsatz während der zweiten Schweißung der Schweißsequenz (106),
**dadurch gekennzeichnet, dass** der erste Durchsatz auf dem ersten Schweißparameter basiert und der zweite Durchsatz auf dem zweiten Schweißparameter basiert,
wobei der erste Schweißparameter und der zweite Schweißparameter auf mindestens einem basieren von: einer Zykluszeit, einem Arbeitszyklus, einer Schweißprozessart, einer Schweißdrahtart, einer Drahtgröße, einer Drahtzufuhrgeschwindigkeit, einer Wellenform, einer Stromstärke, einer Spannung, einem Trimmwert, einer Polarität, einer Abscheidungsrate, einem Übertragungsmodus, einer Schweißstellenkonfiguration, einer Art von Basismaterial, einer Schweißleistungsquelleneinstellung, einer Drahtzuführungseinstellung, einer Schweißpistoleneinstellung, einer entfernten Stromstärkensteuereinstellung, einer entfernten Spannungssteuereinstellung, einem Schutzgasdurchsatz oder einer Schutzgaszusammensetzung.

2. Verfahren nach Anspruch 1, ferner umfassend:
Bestimmen einer Einstellung der Durchsatzsteuervorrichtung (200) basierend auf dem ersten Durchsatz während der ersten Schweißung der Schweißsequenz (106); und
Bestimmen einer Einstellung der Durchsatzsteuervorrichtung (200) basierend auf dem zweiten Durchsatz während der zweiten Schweißung der Schweißsequenz (106).

3. Verfahren nach einem der vorstehenden Ansprüche, ferner umfassend:
Bestimmen des ersten Durchsatzes basierend auf dem ersten Schweißparameter; und
Bestimmen des zweiten Durchsatzes basierend auf dem zweiten Schweißparameter.

4. Verfahren nach einem der vorstehenden Ansprüche, ferner umfassend:
Empfangen von Schweißdaten basierend auf der ersten Schweißung oder der zweiten Schweißung, wobei die Schweißdaten auf mindestens einem basieren von: einer Zykluszeit, einem Arbeitszyklus, einer Schweißprozessart, einer Schweißdrahtart, einer Drahtgröße, einer Drahtzufuhrgeschwindigkeit, einer Wellenform, einer Stromstärke, einer Spannung, einem Trimmwert, einer Polarität, einer Abscheidungsrate, einem Übertragungsmodus, einer Schweißleistungsquelleneinstellung, einer Drahtzuführungseinstellung, einer Schweißpistoleneinstellung, einer entfernten Stromstärkensteuereinstellung, einer entfernten Spannungssteuereinstellung, Rauchdaten, Luftqualitätsdaten, einem Schutzgasdurchsatz, einer Schutzgaszusammensetzung, und
Bestimmen des ersten Durchsatzes oder des zweiten Durchsatzes basierend auf den Schweißdaten; vorzugsweise ferner umfassend:
wobei die Schweißdaten die Rauchdaten umfassen;
Vergleichen der Rauchdaten mit einem vorbestimmten Schwellenwert; und
Erzeugen einer Benachrichtigung, falls die Rauchdaten den vorbestimmten Schwellenwert überschreiten.

5. Verfahren nach einem der vorstehenden Ansprüche, ferner umfassend:
Empfangen mindestens einer Bedienerauswahl, die der ersten Schweißung oder der zweiten Schweißung zugeordnet ist; und
Bestimmen des ersten Durchsatzes oder des zweiten Durchsatzes basierend auf der mindestens einen Bedienerauswahl.

6. System zum Durchführen des Rauchabzugs, umfassend:
eine Steuerung, umfassend einen Prozessor und einen Speicher,
**dadurch gekennzeichnet, dass** die Steuerung Logik umfasst zum:
Verwenden einer Schweißsequenz (106), die mindestens zwei Schweißungen zugeordnet ist, wobei die Schweißsequenz (106) mindestens einen ersten Schweißvorgang, um eine erste Schweißung zu erzeugen, die einen ersten Schweißparameter einschließt, und einen zweiten Schweißvorgang definiert, um eine zweite Schweißung zu erzeugen, die einen zweiten Schweißparameter einschließt;
wobei der Schweißvorgang einen ersten Durchsatz einschließt, und wobei der zweite Schweißvorgang einen zweiten Durchsatz einschließt;
Einstellen einer Durchsatzsteuervorrichtung (200), die dem Rauchabzug zugeordnet ist, auf den ersten Durchsatz während der ersten Schweißung der Schweißsequenz (106); und
Einstellen der Durchsatzsteuervorrichtung (200) auf den zweiten Durchsatz während der zweiten Schweißung der Schweißsequenz (106),
wobei der erste Durchsatz auf dem ersten Schweißparameter basiert und der zweite Durchsatz auf dem zweiten Schweißparameter basiert,
wobei der erste Schweißparameter und der zweite Schweißparameter auf mindestens einem basieren von: einer Zykluszeit, einem Arbeitszyklus, einer Schweißprozessart, einer Schweißdrahtart, einer Drahtgröße, einer Drahtzufuhrgeschwindigkeit, einer Wellenform, einer Stromstärke, einer Spannung, einem Trimmwert, einer Polarität, einer Abscheidungsrate, einem Übertragungsmodus, einer Schweißstellenkonfiguration, einer Art von Basismaterial, einer Schweißleistungsquelleneinstellung, einer Drahtzuführungseinstellung, einer Schweißpistoleneinstellung, einer entfernten Stromstärkensteuereinstellung, einer entfernten Spannungssteuereinstellung, einem Schutzgasdurchsatz oder einer Schutzgaszusammensetzung.

7. System nach Anspruch 6, wobei die Steuerung ferner Logik umfasst zum:
Bestimmen einer Einstellung der Durchsatzsteuervorrichtung (200) basierend auf dem ersten Durchsatz; und
Bestimmen einer Einstellung der Durchsatzsteuervorrichtung (200) basierend auf dem zweiten Durchsatz,
wobei die Steuerung vorzugsweise ferner Logik umfasst zum:
Bestimmen des ersten Durchsatzes basierend auf dem ersten Schweißparameter; und Bestimmen des zweiten Durchsatzes basierend auf dem zweiten Schweißparameter.

8. System nach Anspruch 6 oder 7, wobei die Steuerung ferner umfasst:
einen Schweißsequenzer, der konfiguriert ist, um die Durchsatzsteuervorrichtung (200) während der ersten Schweißung auf den ersten Durchsatz einzustellen und die Durchsatzsteuervorrichtung (200) während der zweiten Schweißung auf den zweiten Durchsatz einzustellen.

9. System nach einem der Ansprüche 6 bis 8, wobei das System ferner umfasst:
mindestens einen Sensor zum Empfangen von Schweißdaten basierend auf der ersten Schweißung oder der zweiten Schweißung;
wobei die Schweißdaten mindestens eines umfassen von: einer Zykluszeit, einem Arbeitszyklus, einer Schweißprozessart, einer Schweißdrahtart, einer Drahtgröße, einer Drahtzufuhrgeschwindigkeit, einer Wellenform, einer Stromstärke, einer Spannung, einem Trimmwert, einer Polarität, einer Abscheidungsrate, einem Übertragungsmodus, einer Schweißleistungsquelleneinstellung, einer Drahtzuführungseinstellung, einer Schweißpistoleneinstellung, einer entfernten Stromstärkensteuereinstellung, einer entfernten Spannungssteuereinstellung, Rauchdaten, Luftqualitätsdaten, einem Schutzgasdurchsatz, einer Schutzgaszusammensetzung; und
wobei die Steuerung konfiguriert ist, um den ersten Durchsatz oder den zweiten Durchsatz basierend auf den Schweißdaten zu bestimmen.
wobei die Steuerung vorzugsweise Logik umfasst, um auf einen Datenspeicher zum Abrufen des ersten Durchsatzes oder des zweiten Durchsatzes basierend auf den Schweißdaten zuzugreifen, und/oder die Steuerung ferner konfiguriert ist, um eine Benachrichtigung zu erzeugen, falls die Rauchdaten einen vorbestimmten Schwellenwert überschreiten.

10. System nach einem der Ansprüche 6 bis 9, wobei die Steuerung ferner eine Schweißleistungsquellensteuerung umfasst, die konfiguriert ist, um elektrische Eigenschaften einer Schweißleistungsquelle zu modifizieren.

11. System nach einem der Ansprüche 6 bis 10, wobei die Durchsatzsteuervorrichtung (200) eine nachträglich einbaubare Komponente umfasst von einem von: einem Rauchabzugssystem und einer Schweißrauchpistole, und/oder wobei die Durchsatzsteuervorrichtung (200) einen Lüftermotor umfasst, der in einem Rauchabzugssystem bereitgestellt ist, wobei der Lüftermotor betriebsfähig ist, um eine Motorlüfterdrehzahl gemäß dem ersten Durchsatz und dem zweiten Durchsatz zu regulieren.

12. System nach einem der Ansprüche 6 bis 11, wobei die Steuerung konfiguriert ist, um die Schweißleistungsquelle zu deaktivieren, wenn die Durchsatzsteuervorrichtung (200) ausgeschaltet ist.

13. System nach einem der Ansprüche 6 bis 12, wobei das System ferner eine Benutzerschnittstelle umfasst, die konfiguriert ist, um mindestens eine Bedienerauswahl zu empfangen, die der ersten Schweißung oder der zweiten Schweißung zugeordnet ist; und
wobei die Steuerung ferner Logik zum Bestimmen des ersten Durchsatzes oder des zweiten Durchsatzes basierend auf der mindestens einen Bedienerauswahl umfasst.

## Revendications

1. Procédé de commande d'extraction de fumée, comprenant :
l'utilisation d'une séquence de soudage (106) associée à au moins deux soudures, dans lequel la séquence de soudage (106) définit au moins une première procédure de soudage pour créer une première soudure comportant un premier paramètre de soudure et une seconde procédure de soudage pour créer une seconde soudure comportant un second paramètre de soudure ;
dans lequel la première procédure de soudage comporte un premier débit d'écoulement, et dans lequel la seconde procédure de soudage comporte un second débit d'écoulement ;
le réglage d'un dispositif de commande de débit (200) associé à une extraction de fumée au premier débit d'écoulement pendant la première soudure de la séquence de soudage (106) ; et
le réglage du dispositif de commande de débit (200) au second débit d'écoulement pendant la seconde soudure de la séquence de soudage (106),
**caractérisé en ce que** le premier débit d'écoulement est basé sur le premier paramètre de soudure et le second débit d'écoulement est basé sur le second paramètre de soudure,
dans lequel le premier paramètre de soudure et le second paramètre de soudure sont basés sur au moins l'un parmi : temps de cycle, cycle de service, type de processus de soudage, type de fil de soudage, taille de fil, vitesse d'alimentation en fil, forme d'onde, ampérage, tension, valeur de compensation, polarité, taux de dépôt, mode de transfert, configuration de joint de soudage, type de matériau de base, réglage de source de puissance de soudage, réglage de dispositif d'alimentation en fil, réglage de pistolet de soudage, réglage de commande d'ampérage à distance, réglage de commande de tension à distance, débit d'écoulement de gaz de protection, ou composition de gaz de protection.

2. Procédé selon la revendication 1, comprenant en outre :
la détermination d'un réglage du dispositif de commande de débit (200) en fonction du premier débit d'écoulement pendant la première soudure de la séquence de soudage (106) ; et
la détermination d'un réglage du dispositif de commande de débit (200) en fonction du second débit d'écoulement pendant la seconde soudure de la séquence de soudage (106).

3. Procédé selon l'une quelconque des revendications précédentes, comprenant en outre :
la détermination du premier débit d'écoulement en fonction du premier paramètre de soudure ; et
la détermination du second débit d'écoulement en fonction du second paramètre de soudure.

4. Procédé selon l'une quelconque des revendications précédentes, comprenant en outre :
la réception de données de soudure en fonction de la première soudure ou de la seconde soudure, dans lequel les données de soudure sont basés sur au moins l'un parmi : temps de cycle, cycle de service, type de processus de soudage, type de fil de soudage, taille de fil, vitesse d'alimentation en fil, forme d'onde, ampérage, tension, valeur de compensation, polarité, taux de dépôt, mode de transfert, réglage de source de puissance de soudage, réglage de dispositif d'alimentation en fil, réglage de pistolet de soudage, réglage de commande d'ampérage à distance, réglage de commande de tension à distance, données de fumée, données sur la qualité de l'air, débit d'écoulement de gaz de protection, composition de gaz de protection et
la détermination du premier débit d'écoulement ou du second débit d'écoulement en fonction des données de soudure ; comprenant de préférence en outre :
dans lequel les données de soudure comprennent les données de fumée ;
la comparaison des données de fumée à un seuil prédéterminé ; et
la création d'une notification si les données de fumée dépassent le seuil prédéterminé.

5. Procédé selon l'une quelconque des revendications précédentes, comprenant en outre :
la réception d'au moins une sélection d'opérateur associée à la première soudure ou à la seconde soudure ; et
la détermination du premier débit d'écoulement ou du second débit d'écoulement en fonction de l'au moins une sélection d'opérateur.

6. Système de réalisation d'extraction de fumée, comprenant :
un dispositif de commande comprenant un processeur et une mémoire,
**caractérisé en ce que** le dispositif de commande comprend une logique pour :
utiliser une séquence de soudage (106) associée à au moins deux soudures, dans lequel la séquence de soudage (106) définit au moins une première procédure de soudage pour créer une première soudure comportant un premier paramètre de soudure et une seconde procédure de soudage pour créer une seconde soudure comportant un second paramètre de soudure ;
dans lequel la procédure de soudage comporte un premier débit d'écoulement, et dans lequel la seconde procédure de soudage comporte un second débit d'écoulement ;
régler un dispositif de commande de débit (200) associé à une extraction de fumée au premier débit d'écoulement pendant la première soudure de la séquence de soudage (106) ; et
régler le dispositif de commande de débit (200) au second débit d'écoulement pendant la seconde soudure de la séquence de soudage (106),
dans lequel le premier débit d'écoulement est basé sur le premier paramètre de soudure et le second débit d'écoulement est basé sur le second paramètre de soudure
dans lequel le premier paramètre de soudure et le second paramètre de soudure sont basés sur au moins l'un parmi : temps de cycle, cycle de service, type de processus de soudage, type de fil de soudage, taille de fil, vitesse d'alimentation en fil, forme d'onde, ampérage, tension, valeur de compensation, polarité, taux de dépôt, mode de transfert, configuration de joint de soudage, type de matériau de base, réglage de source de puissance de soudage, réglage de dispositif d'alimentation en fil, réglage de pistolet de soudage, réglage de commande d'ampérage à distance, réglage de commande de tension à distance, débit d'écoulement de gaz de protection, ou composition de gaz de protection.

7. Système selon la revendication 6, dans lequel le dispositif de commande comprend en outre une logique pour :
déterminer un réglage du dispositif de commande de débit (200) en fonction du premier débit ; et
déterminer un réglage du dispositif de commande de débit (200) en fonction du second débit,
dans lequel le dispositif de commande comprend de préférence en outre une logique pour :
déterminer le premier débit d'écoulement en fonction du premier paramètre de soudure ; et
déterminer le second débit d'écoulement en fonction du second paramètre de soudure.

8. Système selon la revendication 6 ou 7, dans lequel le dispositif de commande comprend en outre :
un séquenceur de soudure qui est configuré pour régler le dispositif de commande de débit (200) au premier débit d'écoulement pendant la première soudure et pour régler le dispositif de commande de débit (200) au second débit d'écoulement pendant la seconde soudure.

9. Système selon l'une quelconque des revendications 6 à 8, dans lequel le système comprend en outre :
au moins un capteur pour recevoir des données de soudure en fonction de la première soudure ou de la seconde soudure ;
dans lequel les données de soudure comprennent au moins l'un parmi : temps de cycle, cycle de service, type de processus de soudage, type de fil de soudage, taille de fil, vitesse d'alimentation en fil, forme d'onde, ampérage, tension, valeur de compensation, polarité, taux de dépôt, mode de transfert, réglage de source de puissance de soudage, réglage de dispositif d'alimentation en fil, réglage de pistolet de soudage, réglage de commande d'ampérage à distance, réglage de commande de tension à distance, données de fumée, données sur la qualité de l'air, débit d'écoulement de gaz de protection, composition de gaz de protection ; et
dans lequel le dispositif de commande est configuré pour déterminer le premier débit d'écoulement ou le second débit d'écoulement en fonction des données de soudure,
dans lequel le dispositif de commande comprend de préférence une logique pour accéder à un stockage de données pour récupérer le premier débit d'écoulement ou le second débit d'écoulement en fonction des données de soudure et/ou le dispositif de commande est en outre configuré pour créer une notification si les données de fumée dépassent un seuil prédéterminé.

10. Système selon l'une quelconque des revendications 6 à 9, dans lequel le dispositif de commande comprend en outre un dispositif de commande de source de puissance de soudage qui est configuré pour modifier des caractéristiques électriques d'une source d'alimentation de soudage.

11. Système selon l'une quelconque des revendications 6 à 10, dans lequel le dispositif de commande d'écoulement (200) comprend un composant rétromontable parmi : système d'extraction de fumée et pistolet de fumée de soudage, et/ou dans lequel le dispositif de commande d'écoulement (200) comprend un moteur de ventilateur fourni dans un système d'extraction de fumée, le moteur de ventilateur pouvant fonctionner pour réguler une vitesse de ventilateur de moteur conformément au premier débit d'écoulement et au second débit d'écoulement.

12. Système selon l'une quelconque des revendications 6 à 11, dans lequel le dispositif de commande est configuré pour désactiver la source de puissance de soudage lorsque le dispositif de commande d'écoulement (200) est désactivé.

13. Système selon l'une quelconque des revendications 6 à 12, dans lequel le système comprend en outre une interface utilisateur qui est configuré e pour recevoir au moins une sélection d'opérateur associée à la première soudure ou à la seconde soudure ; et
dans lequel le dispositif de commande comprend en outre une logique pour déterminer le premier débit d'écoulement ou le second débit d'écoulement en fonction de l'au moins une sélection d'opérateur.
